# EUROPÄISCHE PATENTANMELDUNG

(11) **EP 1 365 008 A1**
(43) Veröffentlichungstag der Anmeldung: **26.11.2003**
(21) Anmeldenummer: 03010353.5
(22) Anmeldetag: 08.05.2003
(51) Int. Cl.: C10L 5/46, B07C 5/342

(54) **Verfahren zur Herstellung von Brennstoffen aus Abfällen und danach hergestellte Brennstoffe**

(30) Priorität: 23.05.2002 DE 10222972
(71) Anmelder: RWE Umwelt AG, 41747 Viersen (DE)
(72) Erfinder: Hüskens, Jürgen, 41748 Viersen (DE); Peters, Wolfgang, 41748 Viersen (DE); Kosch, Stefan, 46509 Xanten (DE)
(74) Vertreter: Cohausz & Florack

(57) **Zusammenfassung**

Dargestellt und beschrieben ist ein Verfahren zur Herstellung von Brennstoffen aus Abfallstoffen, bei dem der Abfall mehreren mechanischen Zerkleinerungs-, Sortier- und ggf. Trocknungsprozessen unterworfen wird. Damit gezielt Stoffe bzw. Materialsorten aus dem Abfall gewonnen werden können, die einen hohen Heizwert und einen konstanten, niedrigen Chlorgehalt aufweisen, wird vorgeschlagen, dass einzelne Fraktionen mittels Nah-Infrarot (NIR)-Technik untersucht und Störstoffe, wie beispielsweise Chlor enthaltende Abfallteile, aus der Fraktion entfernt werden.

## Beschreibung

Die Erfindung betrifft ein Verfahren zur Herstellung von Brennstoffen aus Abfallstoffen, bei dem der Abfall mehreren mechanischen Zerkleinerungs-, Sortier- und ggf. Trocknungsprozessen unterworfen wird, sowie danach hergestellte Brennstoffe.

Auf Grund der drohenden Schließung zahlreicher Deponien, und der dann entstehenden deutlichen Unterkapazität der vorhandenen Müllverbrennungsanlagen gewinnen alternative Verwertungsverfahren für die verschiedensten Abfälle immer mehr an Bedeutung.

Bei fast allen Verwertungsverfahren für Sperrmüll, Hausmüll und auch Gewerbeabfälle spielt neben den Fraktionen, die werkstofflich verwertet werden können wie beispielsweise Papier, Pappe, Kartonagen, Holz, und Metalle, die Fraktion `Brennstoff' eine zunehmende Rolle.

Mit verschiedensten Verfahrenstechniken werden dem Abfall "hochkalorische" Bestandteile entnommen, und als Brennstoff deklariert. Zum Stand der Technik gehören beispielsweise das Trockenstabilat® -Verfahren (eingetragene Marke der Herhof Umwelttechnik GmbH, Solms), die Abtrennung von Leichtgut aus Abfällen mittels Windsichter oder Ballistikseparator oder die manuelle Erfassung von brennbaren und chemisch geeigneten Stoffen. Diese Verfahren werden vor oder nach einer Zerkleinerung, vor oder nach einer Trocknung und bei verschiedensten Korngrößen angewendet.

All diese mechanisch arbeitenden Verfahren arbeiten letztendlich nach dem Prinzip einer Leichtguterfassung, egal ob mit Windsichter, Ballistikseparator, oder mit Luftherden wie beim Trockenstabilat® -Verfahren. Das aussortierte Leichtgut wird dann als `Brennstoff' bezeichnet.

Diese heute produzierten Brennstoffqualitäten sind sehr schwankend in ihrer chemischen Zusammensetzung, und halten zum Teil die von den Abnehmern geforderten chemischen Eigenschaften nicht ein. Hauptprobleme sind Chlor, Fluor, Quecksilber und einigen weiteren Schwermetallen. Ein Aussortieren dieser Elemente aus Brennstoffen aus gemischten Abfällen ist mittels rein mechanisch oder manuell arbeitenden Anlagen nicht möglich.

Beim Einsatz von Brennstoffen aus Abfällen und/oder Abfallgemischen ist insbesondere bei der Verwendung in Kraftwerkskesseln deren chemische Zusammensetzung von erheblicher Bedeutung. Diese sog. 'Sekundärbrennstoffe' werden neben ihrer Verwendung in Kraftwerkskesseln seit längerem auch bei der Zement- oder Kalkherstellung als Substitutionsbrennstoff eingesetzt, und zwar in einer Substitutionsrate, die bei Braunkohlekraftwerken zwischen 10 und 25 %, bei der Zement- oder Kalkherstellung sogar zwischen 10 und 50 % der Menge des ursprünglichen Primär- oder Regelbrennstoffes beträgt. Dabei sind - neben dem Heizwert - auch die Gehalte an unerwünschten Stoffen Chlor, Fluor, Quecksilber und/oder weiteren Schwermetallen von besonderem Interesse.

Seit einigen Jahren werden nun schon die verschiedensten definierten Brennstoffqualitäten versuchsweise in beispielsweise Kraft-, Zement- oder Kalkwerken als Sekundärbrennstoff eingesetzt. Dabei stellt sich heraus, dass nur diejenigen Brennstoffe, die einem definierten Inputmaterial entstammen, wie solche aus produktionsspezifischen Abfällen, eine relativ homogene Qualität aufweisen.

Diejenigen Brennstoffe, die einem Abfallgemisch entstammen, wie beispielsweise dem Hausmüll, schwanken recht stark in ihrer Qualität. Da jeder potentielle Abnehmer bisher Regelbrennstoff gewohnt ist, und auch beim eingesetzten Brennstoff verschiedenste chemische Parameter bzw. chemische Frachten nicht überschreiten darf, ist der großtechnische Einsatz der bisher als 'Brennstoffe' bezeichneten Qualitäten eher fraglich.

Ein wesentlicher chemischer Parameter ist dabei der Cl-Gehalt. Die Chlorfrachten in Abfällen stammen zu einem Teil aus den vorhandenen Salzen, überwiegend aus NaCl, aber zum größeren Teil aus dem Bereich der Kunststoffe und deren Verbunde.

Verschiedene Beispiele sollen dies verdeutlichen:
1) Hausmüll der zunächst bei 200 mm abgesiebt wird, und bei dem der resultierende Siebüberlauf anschließend mittels eines Ballistikseparators in Leicht- und Schwergut getrennt wird. Das Leichtgut dieses Ballistikseparators weist beispielsweise Chlorgehalte von 0,2 - 2,5 % auf.
   Bei Sperrmüll, der zunächst vorzerkleinert wird, dann bei 200 mm gesiebt wird und anschließend mittels eines Ballistikseparators in Leicht- und Schwergut getrennt wird, weist das Leichtgut beispielsweise Chlorgehalte von 0,1 - 2 % auf.
2) Bei einem Windsichterleichtgut einer Fraktion kommunalen Gewerbeabfalls 100 - 200 mm sind ebenfalls Schwankungen im Bereich von 0,2 - 0,8 % beim Chlorgehalt festzustellen.
3) Bei einem Windsichterleichtgut einer Sperrmüllfraktion 100 - 200 mm schwankt der Chlorgehalt von 0,1 - 2 %.
4) Deutlich extremer sind die Schwankungsbreiten bei der Herstellung von Brennstoffen aus Gewerbeabfällen und bei der Herstellung von Brennstoffen aus Resten einer LVP-Sortieranlage (LVP=Leichtstoffverpackung). Dort sind Chlorgehalte von 0,1 - 7 % in verschiedenen mechanisch erzeugten Brennstoffqualitäten ermittelt worden.

Da die vorgenannten Brennstoffqualitäten alle oberhalb von 100 mm Korngröße erzeugt wurden, kann man den Anteil der Salze, die überwiegend in der organischen Feinfraktion zu finden sind, vernachlässigen. Das bedeutet, dass die Chlorfrachten fast ausschließlich durch Kunststoffe und deren Verbunde zustande kommen.

Diese Problematik ist relativ einfach zu erklären.
Bei der Erfassung eines Leichtgutes aus Abfallgemischen spielt natürlich die Zusammensetzung des Ausgangsmaterials eine wesentliche Rolle. Da die Aggregate zur Sortierung eines Leichtgutes nicht materialsortenspezifisch erfassen, sondern lediglich nach Dichte, Korngröße, Masse, Fläche usw., können sie die unterschiedlichen Inputzusammensetzungen nicht korrigieren.

Gelangen beispielsweise nach den Sommerferien die defekten Schlauchboote, Planschbecken, Wasserbälle etc. in das Abfallgemisch, so werden diese Teile zum Brennstoff abgetrennt. Als Folge steigt der Cl-Gehalt im Brennstoff.

Folien aus PVC (Polyvinylchlorid) oder beispielsweise auch Tablettenblister, deren Folie meist aus PVDC (Polyvinylidenchlorid) hergestellt wird, sind weitere typische Fraktionen, die in ein Leichtgut, also den Brennstoff gelangen. Dazu kommen eine Vielzahl von technischen, chlorhaltigen Kunststoffen, die bis hin zu leeren Kabelhülsen in das Brennstoffmaterial geschleust werden.

Der Erfindung liegt daher die Aufgabe zugrunde, das eingangs genannte Verfahren zur Herstellung von Brennstoffen aus Abfallstoffen so auszugestalten und weiterzubilden, dass gezielt Stoffe bzw. Materialsorten aus dem Abfall gewonnen werden können, die einen hohen Heizwert und einen konstanten, niedrigen Chlorgehalt aufweisen.

Gelöst wird diese Aufgabe hinsichtlich des Verfahrens zunächst dadurch, dass einzelne Fraktionen mittels Nah-Infrarot (NIR)-Technik untersucht und Störstoffe, wie beispielsweise Chlor enthaltende Abfallteile, aus der Fraktion entfernt werden.

Eine alternative Lösung sieht vor, dass einzelne Fraktionen mittels Nah-Infrarot (NIR)-Technik untersucht und Gutstoffe, wie beispielsweise kein oder wenig Chlor enthaltende Abfallteile, aus der Fraktion entfernt werden.

Aus dem Stand der Technik ist es bereits bekannt, dass bei der Sortierung von Leichtverpackungen des DSD (Duales System Deutschland) Geräte zur Materialidentifizierung eingesetzt werden, die mittels der Messung der Reflektion von "Nah-Infrarotem" Licht, im folgenden kurz als "NIR" = (Near Infra Red) bezeichnet, verschiedene Materialsorten erkennen können. Diese sind beispielsweise PE (Polyethylen), PP (Polypropylen), PS (Polystyrol), PET (Polyethylenterephtalat), Getränkekartons oder auch Papier. Erfindungsgemäß werden diese Geräte nun zum Einstellen von Brennstoffqualitäten bestimmter Abfallfraktionen eingesetzt.

Mit der gleichen Technik lässt sich auch PVC erkennen, solange die zu erkennenden Teile Licht reflektieren, also die Teile nicht schwarz oder allgemein sehr dunkel sind.

Nun ergeben sich zwei Möglichkeiten, die in einem Brennstoff aus Abfällen störenden Chlorfrachten zu minimieren.
1) PVC wird mittels NIR-Technik erkannt, und positiv aus dem Materialstrom entfernt. Dabei können jedoch die dunklen Teile nicht identifiziert werden, Alle massiven Störstoffe wie Metalle etc. verbleiben im Produkt, und der evtl. vorhandene Anteil an Organik, welcher heizwertsenkend ist, verbleibt ebenfalls im Produkt.
2) Die Geräte sollen all solches Material mittels Druckluftimpulsen aussortieren, welches als chemisch gutes Brennstoffvormaterial vorab analysiert und dem NIR-Gerät "eintrainiert" wurde. Der Nachteil dieser Variante ist ein nicht zu vernachlässigender Verlust an brennstoffgeeignetem Material, jedoch ist das aussortierte Brennstoffmaterial konstant gut in seiner Qualität.

### Einige Beispiele sollen dies verdeutlichen:

Wenn positiv PE aussortiert wird, so kann zwar die Ausbringungsrate des Gerätes schwanken, jedoch bleibt das Produkt immer PE mit konstanter chemischer Qualität. Oder, wenn nur PVC aussortiert wird, so verbleibt zum einen alles nicht identifizierbare im Produkt, und zum zweiten hat das Gerät keinerlei Einfluss auf einen schwankenden Anteil schwarzer PVC-Teile. Diese werden nicht erkannt und verbleiben daher zwangsläufig im Produkt.

Durch zahlreiche Tests mit den nach dem Stand der Technik verfügbaren NIR-Geräten konnte ermittelt werden, dass mit den Standardgeräten je nach aufgegebenem Abfallgemisch kein qualitativ hochwertiger Brennstoff mit wirtschaftlich verträglichen Ausbringungsraten erzeugt werden kann.

Daher ist in weiterer Ausgestaltung der Erfindung vorgesehen, dass die NIR-Geräte aufgrund der Ergebnisse von Messreihen auf bestimmte wiederkehrende Störstoffe enthaltende Abfallteile programmiert werden, um diese Abfallteile zuverlässig auszuhalten.

Die verschiedenen Abfallgemische sind sehr inhomogen, und bestehen aus derart vielen verschiedenen Materialsorten und Verbundstoffen, dass zunächst jede einzelne Materialart chemisch analysiert werden musste, und danach dem NIR-Gerät entsprechend "antrainiert" worden ist. Dabei wurde beispielsweise beim Sperrmüll oder Baumischabfall festgestellt, dass ein hoher Chloreintrag in den Brennstoff durch Bauschäume verursacht wird. Diese Schäume, die bis vor einigen Jahren noch mit FCKW (Fluor-Chlor-Kohlenwasserstoffe) aufgeschäumt wurden, bringen wegen des vorhandenen FCKW eine relativ hohe Chlorfracht mit sich. Diese Materialien wurden analysiert, das NIR-Gerät entsprechend programmiert, so dass sie nun erfolgreich aus dem Brennstoff ausgehalten werden können.

Gleiches gilt für alte PVC Bodenbeläge oder Sockelleisten. Liegt ein solches Teil mit der PVC Seite zum NIR-Gerät, so ist eine Erkennung kein Problem. Liegt die Rückseite des Bodenbelages zum NIR-Gerät, so erkennen die Standardgeräte "Unbekannt", nämlich den Kleber. Das NIR-Signal des Kleberückens wurde daraufhin ebenfalls einprogrammiert und somit kann der Bodenbelag unabhängig von der Lage zum NIR-Gerät als störend erkannt werden.

Die Standard NIR-Geräte kann man grundsätzlich in zwei Gruppen einteilen:
1) Die einen scannen permanent das Förderband, unabhängig der Belegung des Bandes.
   Wird nun diesem Gerät beispielsweise eine PVC Flasche aufgegeben deren Verschlusskappe aus PP ist, und ein großzügiges Etikett aus Papier auf der Flasche aufgebracht ist, so erkennt ein solches Gerät zunächst die PP Verschlusskappe, danach ein Teil PVC, dann das Papieretikett, und zum Schluss wieder einen Teil PVC.
   Gibt man einem derart arbeitenden Gerät die Aufgabe, 'Schieße auf PP und Papier als Brennstoff', so wird oftmals die gesamte PVC Flasche in das Produkt gelangen.
2) Die anderen NIR-Geräte 'schauen' zunächst mit einfachen, im sichtbaren Wellenlängenbereich, optisch arbeitenden Kameras auf das Förderband, erkennen die Flasche als ein Teil, und scannen dann gezielt dieses Objekt. Das Gerät bekommt zwar zunächst die gleichen Informationen wie in Fall 1, nämlich ein Gemisch aus PP, Papier und PVC, kann aber dann Dank des 'Wissens', es handelt sich um ein einziges Objekt, so programmiert werden, dass es dieses Objekt als PVC enthaltend ignoriert.

In dieser Art gibt es zahlreiche Verbundstoffe, mit denen die herkömmlichen Geräte aus der LVP-Sortierung stammend nichts anfangen können.

Die Korngröße der den NIR-Geräten aufgegebenen Fraktionen spielt ebenfalls eine Rolle.

Aus oben genannten Gründen ist es zweckmäßig, in Korngrößenbereichen in denen solche Verbundstoffe vorkommen (ab ca. 80 - 120 mm aufwärts) die NIR-Geräte aus der Gruppe 2) einzusetzen.

In den kleineren Korngrößenbereichen können die leistungsstärkeren NIR-Geräte aus der Gruppe 1) eingesetzt werden.

Um genügend Reflektion des nah-infraroten Lichtes zu bekommen, weisen die meisten NIR-Geräte einen Abstand zwischen Förderband und NIR-Spektrometer, bzw. den Lampen von weniger als 500 mm auf. Gibt man ein unsortiertes, nicht zerkleinertes Abfallgemisch auf, so werden diese Geräte unweigerlich nach relativ kurzer Zeit durch große im Abfall befindliche Teile zerstört.

Bei geringer Korngröße der Inputmaterialien ist ein geringerer Abstand zwischen Spektrometer und Material dagegen erwünschenswert. Feinanteile des Abfallgemisches sollten jedoch vor dem NIR-Gerät entfernt werden. Dies deshalb, weil NIR-Geräte meist einen Messfleck von 15 - 30 mm aufweisen, und bei Teilen, die kleiner als der Messfleck sind, eine ungenügende Genauigkeit der Messung stattfindet. Darüber hinaus stören Feinanteile die Mechanik der Abtrennung erkannter Materialien und behindern eine exakte Messung.

Daher ist nach einer weiteren Lehre der Erfindung der Abstand der NIR-Geräte zum Förderband je nach dem gerade transportierten Abfall variierbar.

Bei der Verarbeitung von Hausmüll ist eine Feinabsiebung vor den NIR-Geräten ohnehin selbstverständlich, da im Feinkornbereich eines Hausmülls überwiegend inerte Materialien und Vegetabilien enthalten sind.

Bei der Verarbeitung von Sperrmüll wurde durch Großversuche bestätigt, dass ein Feinkorn aus Sperrmüll nur durch eine Absiebung bei < 50 mm (28 mm) ohnehin schon konstant gute chemische Eigenschaften aufweist. Dies liegt darin begründet, dass nach einer nicht schneidenden Vorzerkleinerung des Sperrmülls der abgesiebte Feinanteil überwiegend aus zerbrochenen Spanplatten besteht, und diese chemisch recht gut und konstant in ihrer Zusammensetzung sind.

Erfindungsgemäße Brennstoffe sind in den Ansprüchen 5 bis 23 näher beschrieben.

Um einen guten, konstanten Brennstoff erzeugen zu können, müssen die Anlagen die Materialsorten erkennen können. Eine Materialerkennung ist zwar aus der LVP-Sortierung für sich bereits bekannt, jedoch sind die entsprechenden heutigen Geräte noch völlig überfordert mit der Vielzahl an Stoffen und Verbundstoffen wie sie in Haus-, Sperr-, und Gewerbemüll vorkommen. Erst durch das erfindungsgemäße Verfahren ist es gelungen, die NIR-Technik so einzusetzen, dass Brennstoffe mit definierten Qualitätsgrenzen hergestellt werden können.

## Patentansprüche

1. Verfahren zur Herstellung von Brennstoffen aus Abfallstoffen, bei dem der Abfall mehreren mechanischen Zerkleinerungs-, Sortier- und ggf. Trocknungsprozessen unterworfen wird,
**dadurch gekennzeichnet,**
**dass** einzelne Fraktionen mittels Nah-Infrarot (NIR)-Technik untersucht und Störstoffe, wie beispielsweise Chlor enthaltende Abfallteile, aus der Fraktion entfernt werden.

2. Verfahren zur Herstellung von Brennstoffen aus Abfallstoffen, bei dem der Abfall mehreren mechanischen Zerkleinerungs-, Sortier- und ggf. Trocknungsprozessen unterworfen wird,
**dadurch gekennzeichnet,**
**dass** einzelne Fraktionen mittels Nah-Infrarot (NIR) - Technik untersucht und Gutstoffe, wie beispielsweise kein oder wenig Chlor enthaltende Abfallteile, aus der Fraktion entfernt werden.

3. Verfahren nach Anspruch 1 oder 2,
**dadurch gekennzeichnet,**
**dass** die NIR-Geräte aufgrund der Ergebnisse von Messreihen auf bestimmte wiederkehrende Störstoffe enthaltende Abfallteile programmiert werden, um diese Abfallteile zuverlässig auszuhalten.

4. Verfahren nach einem der Ansprüche 1 bis 3,
**dadurch gekennzeichnet, dass** der Abstand der NIR-Geräte zum Förderband je nach dem gerade transportierten Abfall variabel ist.

5. Brennstoff aus einer nicht getrockneten Hausmüllfraktion 50 - 100 mm, erhältlich durch ein Verfahren nach einem der Ansprüche 1 bis 4,
**dadurch gekennzeichnet, dass** bei einem Heizwert von 8.000 bis 13.000 kJ/kg der Cl-Gehalt zwischen 0,15 und 0,6 % und der Fl-Gehalt zwischen 20 und 100 mg/kg liegt.

6. Brennstoff aus einer nicht getrockneten Hausmüllfraktion 100 - 200 mm, erhältlich durch ein Verfahren nach einem der Ansprüche 1 bis 4,
**dadurch gekennzeichnet, dass** bei einem Heizwert von 12.000 bis 16.000 kJ/kg der Cl-Gehalt zwischen 0,15 und 0,5 % und der Fl-Gehalt zwischen 40 und 100 mg/kg liegt.

7. Brennstoff aus einer nicht getrockneten Hausmüllfraktion > 200 mm, erhältlich durch ein Verfahren nach einem der Ansprüche 1 bis 4,
**dadurch gekennzeichnet, dass** bei einem Heizwert von 13.000 bis 19.000 kJ/kg der Cl-Gehalt zwischen 0,15 und 0,6 % und der Fl-Gehalt zwischen 40 und 100 mg/kg liegt.

8. Brennstoff aus nicht getrockneten Hausmüllabfällen, erhältlich durch ein Verfahren nach einem der Ansprüche 1 bis 4, wobei der Brennstoff die Leichtfraktion aus einer Klassiervorrichtung ist,
**dadurch gekennzeichnet, dass** bei einem Heizwert von 12.000 bis 16.000 kJ/kg der Cl-Gehalt zwischen 0,3 und 0,9 % und der Fl-Gehalt zwischen 20 und 100 mg/kg liegt.

9. Brennstoff aus nicht getrockneten Hausmüllabfällen, erhältlich durch ein Verfahren nach einem der Ansprüche 1 bis 4,
**dadurch gekennzeichnet, dass** bei einem Heizwert von 8.000 bis 19.000 kJ/kg der Cl-Gehalt zwischen 0,15 und 0,9 % und der Fl-Gehalt zwischen 20 und 100 mg/kg liegt.

10. Brennstoff aus einer getrockneten Hausmüllfraktion 50 - 100 mm, erhältlich durch ein Verfahren nach einem der Ansprüche 1 bis 4,
**dadurch gekennzeichnet, dass** bei einem Heizwert von 9.500 bis 15.000 kJ/kg der Cl-Gehalt zwischen 0,2 und 0,8 % und der Fl-Gehalt zwischen 25 und 115 mg/kg liegt.

11. Brennstoff aus einer getrockneten Hausmüllfraktion 100 - 200 mm, erhältlich durch ein Verfahren nach einem der Ansprüche 1 bis 4,
**dadurch gekennzeichnet, dass** bei einem Heizwert von 13.500 bis 18.000 kJ/kg der Cl-Gehalt zwischen 0,19 und 0,63 % und der Fl-Gehalt zwischen 45 und 115 mg/kg liegt.

12. Brennstoff aus einer getrockneten Hausmüllfraktion > 200 mm, erhältlich durch ein Verfahren nach einem der Ansprüche 1 bis 4,
**dadurch gekennzeichnet, dass** bei einem Heizwert von 14.500 bis 22.000 kJ/kg der Cl-Gehalt zwischen 0,19 und 0,75 % und der Fl-Gehalt zwischen 45 und 115 mg/kg liegt.

13. Brennstoff aus getrockneten Hausmüllabfällen, erhältlich durch ein Verfahren nach einem der Ansprüche 1 bis 4, wobei der Brennstoff die Leichtfraktion aus einer Klassiervorrichtung ist,
**dadurch gekennzeichnet, dass** bei einem Heizwert von 13.000 bis 18.000 kJ/kg der Cl-Gehalt zwischen 0,35 und 0,9 % und der Fl-Gehalt zwischen 25 und 120 mg/kg liegt.

14. Brennstoff aus getrockneten Hausmüllabfällen, erhältlich durch ein Verfahren nach einem der Ansprüche 1 bis 4,
**dadurch gekennzeichnet, dass** bei einem Heizwert von 9.500 bis 22.000 kJ/kg der Cl-Gehalt zwischen 0,19 und 0,9 % und der Fl-Gehalt zwischen 25 und 120 mg/kg liegt.

15. Brennstoff aus einer Fraktion < 50 mm kommunalen Gewerbeabfalls, erhältlich durch ein Verfahren nach einem der Ansprüche 1 bis 4,
**dadurch gekennzeichnet, dass** bei einem Heizwert von 6.000 bis 11.000 kJ/kg der Cl-Gehalt zwischen 0,1 und 0,8 % und der Fl-Gehalt zwischen 50 und 110 mg/kg liegt.

16. Brennstoff aus einer Fraktion 50 - 100 mm kommunalen Gewerbeabfalls, erhältlich durch ein Verfahren nach einem der Ansprüche 1 bis 4,
**dadurch gekennzeichnet, dass** bei einem Heizwert von 10.000 bis 16.000 kJ/kg der Cl-Gehalt zwischen 0,15 und 0,6 % und der Fl-Gehalt zwischen 40 und 150 mg/kg liegt.

17. Brennstoff aus einer Fraktion 100 - 200 mm kommunalen Gewerbeabfalls, erhältlich durch ein Verfahren nach einem der Ansprüche 1 bis 4,
**dadurch gekennzeichnet, dass** bei einem Heizwert von 13.500 bis 19.000 kJ/kg der Cl-Gehalt zwischen 0,15 und 0,6 % und der Fl-Gehalt zwischen 30 und 130 mg/kg liegt.

18. Brennstoff aus einer Fraktion > 200 mm kommunalen Gewerbeabfalls, erhältlich durch ein Verfahren nach einem der Ansprüche 1 bis 4,
**dadurch gekennzeichnet, dass** bei einem Heizwert von 15.500 bis 22.000 kJ/kg der Cl-Gehalt zwischen 0,15 und 0,6 % und der Fl-Gehalt zwischen 30 und 140 mg/kg liegt.

19. Brennstoff aus kommunalem Gewerbeabfall, erhältlich durch ein Verfahren nach einem der Ansprüche 1 bis 4,
**dadurch gekennzeichnet, dass** bei einem Heizwert von 6.000 bis 22.000 kJ/kg der Cl-Gehalt zwischen 0,1 und 0,8 % und der Fl-Gehalt zwischen 20 und 150 mg/kg liegt.

20. Brennstoff aus einer Sperrmüllfraktion 50 - 100 mm, erhältlich durch ein Verfahren nach einem der Ansprüche 1 bis 4,
**dadurch gekennzeichnet, dass** bei einem Heizwert von 13.000 bis 18.500 kJ/kg der Cl-Gehalt zwischen 0,15 und 0,5 % und der Cd-Gehalt zwischen 1 und 9 mg/kg liegt.

21. Brennstoff aus einer Sperrmüllfraktion 100 - 200 mm, erhältlich durch ein Verfahren nach einem der Ansprüche 1 bis 4,
**dadurch gekennzeichnet, dass** bei einem Heizwert von 14.000 bis 20.000 kJ/kg der Cl-Gehalt zwischen 0,1 und 0,5 % und der Cd-Gehalt zwischen 1 und 8 mg/kg liegt.

22. Brennstoff aus einer Sperrmüllfraktion > 200 mm, erhältlich durch ein Verfahren nach einem der Ansprüche 1 bis 4,
**dadurch gekennzeichnet, dass** bei einem Heizwert von 18.000 bis 22.500 kJ/kg der Cl-Gehalt zwischen 0,1 und 0,6 % und der Fl-Gehalt zwischen 50 und 100 mg/kg liegt.

23. Brennstoff aus Sperrmüllabfällen, erhältlich durch ein Verfahren nach einem der Ansprüche 1 bis 4, wobei der Brennstoff die Leichtfraktion aus einer Klassiervorrichtung ist,
**dadurch gekennzeichnet, dass** bei einem Heizwert von 12.000 bis 16.000 kJ/kg der Cl-Gehalt zwischen 0,3 und 0,9 % und der Cd-Gehalt zwischen 2 und 10 mg/kg liegt.
